# EUROPÄISCHE PATENTSCHRIFT

(11) **EP 2 828 072 B1**
(45) Veröffentlichungstag und Bekanntmachung des Hinweises auf die Patenterteilung: **01.02.2017**
(21) Anmeldenummer: 13709889.3
(22) Anmeldetag: 13.03.2013
(51) Int. Cl.: B29D 29/06, B29C 70/32, B29C 53/66

(54) **ENDLOSBAND UND VERFAHREN ZUR HERSTELLUNG EINES ENDLOSBANDS**
ENDLESS BELT, AND METHOD FOR PRODUCING AN ENDLESS BELT
BANDE SANS FIN ET PROCÉDÉ DE FABRICATION D'UNE BANDE SANS FIN

(30) Priorität: 20.03.2012 DE 102012102344
(43) Veröffentlichungstag der Anmeldung: 28.01.2015
(73) Patentinhaber: Berndorf Band GmbH, 2560 Berndorf (AT)
(72) Erfinder: DALHAUS Ludwig, 32609 Hüllhorst (DE)
(74) Vertreter: Burger, Hannes
(86) Internationale Anmeldenummer: PCT/EP2013/055128
(87) Internationale Veröffentlichungsnummer: WO 2013/139659

(56) Entgegenhaltungen:
- EP-A1- 1 752 283
- DE-A1- 3 827 486
- GB-A- 2 478 888
- JP-A- H08 267 589
- JP-A- 2000 302 275
- JP-A- 2002 292 766
- JP-A- 2009 058 661
- US-A- 2 951 003
- US-A- 5 171 389

## Beschreibung

Die Erfindung betrifft ein Verfahren zum Herstellen eines Endlosbands, das zumindest eine im Endlosband spiralförmig umlaufende Faser aufweist, wobei eine umlaufende Trägerfolie bereitgestellt wird, die eine mit einer Klebeschicht versehene Seite aufweist, und dass die zumindest eine Faser spiralförmig auf die mit der Klebeschicht versehene Seite der Trägerfolie aufgebracht wird.

Weiters betrifft die Erfindung ein Endlosband, mit einer umlaufenden Trägerfolie, die eine mit einer Klebeschicht versehene Seite aufweist, wobei zumindest eine Faser spiralförmig auf die mit der Klebeschicht versehene Seite der Trägerfolie aufgebracht ist.

Endlosbänder werden in technischen Vorrichtungen vielfältig eingesetzt, beispielsweise in Doppelbandpressen und zu Transport- und Förderzwecken. Ein Endlosband der eingangs genannten Art ist aus der US2951003 A bekannt geworden. Aus der JP 2002 292766 A ist ein Transportband mit einer induktiv erwärmbaren Heizlage bekannt geworden.

Endlosbänder können hergestellt werden, indem zwei Enden eines Bandabschnitts aufeinander gelegt und miteinander verbunden werden. Im Verbindungsbereich (Nahtbereich) weist ein derartig hergestelltes Endlosband typischerweise eine Materialverdickung auf. Diese Materialverdickung kann bei Einsatz des Endlosbandes störend sein. Zudem stellt sie eine Stabilitätsschwachstelle dar.Alternativ dazu sind Verfahren zur Herstellung von nahtlosen Endlosbändern bekannt, beispielsweise aus der Druckschrift DE 3 238 239 A1. Bei diesem Verfahren wird ein Garn oder Seil spiralförmig nebeneinander auf zwei voneinander beabstandete drehbare Trommeln aufgewickelt. Das verwendete Garn oder Seil kann dabei vor dem Aufwickeln mit einem Bindemittel getränkt werden. Alternativ oder zusätzlich kann eine Vorrichtung vorgesehen sein, um die bereits aufgewickelte Lage aus Garnen oder Seilen mit Bindemittel zu tränken. Unter Einwirkung von Hitze und/oder Druck werden die nebeneinander spiralförmig aufgewickelten Seile oder Garne durch Aushärten des Bindemittels miteinander verbunden. Das so entstandene Endlosband wird anschließend seitlich von den Trommeln abgezogen. In Längsrichtung weist dieses Endlosband durch die fehlende Nahtstelle eine sehr hohe mechanische Belastbarkeit auf. Gegenüber den dabei bislang verwendeten Garnen oder Seilen weisen moderne Kunstfasern beispielsweise Fasern aus Polyetherketon (PEEK) oder Polysulfon (PSU) oder Polytetrafluorethylen (PTFE) eine bisher unerreichte Zugfestigkeit und Elastizität auf. Auch das Reißverhalten dieser Kunststofffasern ist vorteilhaft.Allen diesen Fasern ist jedoch gemein, dass sie eine sehr glatte und somit wenig griffige Oberfläche aufweisen.

Wird das genannte Verfahren zur Herstellung eines hochfesten nahtlosen Endlosbandes mit derartigen Kunstfasern durchgeführt, ergibt sich das Problem, dass die geringe Reibung der Fasern auf den zum Aufwickeln benutzten drehbaren Trommeln durchrutscht, wodurch sich auch bei einer mit gleichmäßiger Zugspannung zugeführten Faser unterschiedliche Spannungen in den einzelnen auf den Trommeln liegenden Schlaufen einstellen können. Dieses resultiert in einem Endlosband, das über seine Breite gesehen Fasern mit unterschiedlicher Spannung und/oder Länge hat. Diese Inhomogenität verringert die mechanische Stabilität und verschlechtert die Laufeigenschaften des Bandes.

Es ist daher eine Aufgabe der vorliegenden Erfindung, ein Herstellungsverfahren für ein Endlosband mit spiralförmig angeordneten Kunststofffasern anzugeben, bei dem die einzelnen im Band nebeneinander liegenden Schlaufen der Kunstfaser über die Breite des Bandes eine homogene Länge und Spannung aufweisen sowie einen lokal optimal an Prozessbedürfnisse angepassten Wärmeeintrag zu ermöglichen. Es ist eine weitere Aufgabe, ein derartiges Endlosband zu schaffen.

Diese Aufgabe wird gelöst durch ein Herstellungsverfahren für ein Endlosband nach Anspruch 1, bei welchem die weiteren Lagen eine Flächenheizlage umfassen, wobei die Flächenheizlage durch mehrere in Längserstreckung- oder Querrichtung übereinander oder überlappend angeordnete Widerstandsheizlagen gebildet wird, wobei die verschiedenen Widerstandsheizlagen unterschiedliche Flächenheizleistungen aufweisen.

Die oben genannte Aufgabe wird auch mit einem Endlosband der eingangs genannten Art erfindungsgemäß nach Anspruch 5 dadurch gelöst, dass es eine Flächenheizlage aufweist und nach einem Verfahren gemäß einem der Ansprüche 1 bis 5 hergestellt ist, wobei eine umlaufende Deckfolie als abschließende äußere Lage vorgesehen ist und die Flächenheizlage durch mindestens eine zwischen Kunststofffolien eingebettete Widerstandsheizschicht, insbesondere Kohlefasern umfassend, gebildet ist, wobei die Flächenheizlage durch mehrere in Längserstreckung- oder Querrichtung übereinander oder überlappend angeordnete Widerstandsheizlagen gebildet, wobei die verschiedenen Widerstandsheizlagen unterschiedliche Flächenheizleistungen aufweisen.

Vorteilhafte Ausgestaltungen und Weiterbildungen sind in den abhängigen Ansprüchen angegeben.

Bei einem erfindungsgemäßen Herstellungsverfahren wird zunächst eine umlaufende Trägerfolie bereitgestellt, die mit einer Klebeschicht versehen ist.

Dann wird eine Faser, insbesondere Kunstfaser, spiralförmig auf die mit der Klebeschicht versehene Seite der Trägerfolie aufgebracht. Entsprechend weist ein erfindungsgemäßes Endlosband, das nach diesem Verfahren hergestellt ist, eine mit einer Klebeschicht versehene Trägerfolie auf, auf der eine spiralförmig umlaufende Faser angeordnet ist.

Als eine Faser, auch Faden genannt, ist im Rahmen ein einzelnes Filament ebenso zu verstehen wie eine Anordnung einer Mehr- oder Vielzahl von zusammengelegten und ggf. miteinander verdrillten oder verschwundenen oder auf eine sonstige Art miteinander verbundenen Filamenten. Dabei ist die Form des Querschnitts in keiner Weise eingeschränkt. Als Fasern im Rahmen der Anmeldung sind somit auch schmale Materialstreifen anzusehen.

Die Faser, insbesondere eine Kunstfaser, bevorzugt aus PEEK, PSU, PTFE, Aramid, Glas oder Kohlenstoff, wird bei dem erfindungsgemäßen Herstellungsverfahren nicht unmittelbar auf Trommeln einer Herstellungsvorrichtung für das Endlosband aufgewickelt, sondern auf die umlaufende und mit einer Klebeschicht versehene Trägerfolie gewickelt. Durch die Klebebeschichtung wird die Faser u.a. bezüglich ihrer Längsrichtung auf der Trägerfolie fixiert. Ein Durchrutschen auf der umlaufenden Trägerfolie, das zu unterschiedlicher Spannung in den aufgewickelten Schlaufen der Faser führen könnte, wird somit bereits beim Aufwickeln verhindert. Im Endeffekt resultiert diese in einer homogenen, gleichmäßigen Spannung und Länge der Fasern in den einzelnen Schlaufen. Es wird so eine unidirektionale (UD)-Schicht aus in gleicher Richtung verlaufenden Fasern gebildet, die vorteilhaft eine hohe Zugkraft aufnehmen kann. Dabei kann bevorzugt die Vorspannung, mit der die Faser beim Einlegen in die Klebeschicht belastet ist, definiert eingestellt und insbesondere geregelt werden. Dieses kann beispielsweise durch eine Bremsspannung der Zufuhreinrichtung erfolgen.

Grundsätzlich kann das Aufwickeln der Fasern von einer Seite des Endlosbandes beginnend bis zur anderen Seite des Endlosbandes erfolgen. Auch ist es möglich, das Endlosband von der Mitte beginnend in zwei ggf. gegenläufigen Wicklungen nach außen hin mit den Fasern zu belegen. Auch mehr als zwei Wicklungsabschnitte, die nacheinander oder auch gleichzeitig gewickelt werden, sind denkbar.

Auf die Anordnung aus Trägerfolie und der zumindest einen Faser werden weitere Lagen aufgebracht. Die weiteren Lagen umfassen eine Flächenheizlage in Form einer WiderstandsHeizlage. Ein derartiges Endlosband kann vorteilhaft in vielen Herstellungsprozessen eingesetzt werden, in dem über das Endlosband ein Temperieren eines Produktes erfolgt. Die integrierte Flächenheizlage des Endlosbandes kann zusätzlich zu einer Heizplatte, über die das Endlosband geführt wird, eingesetzt werden oder die Heizplatte vollständig ersetzen. Durch die integrierte Heizung ergibt sich der Vorteil einer besseren Regelbarkeit und eines schnelleren Aufheizens.

Eine der weiteren Lagen kann zudem durch Fasern oder Folienstreifen gebildet werden, die quer zu der Längserstreckung des Endlosbands angeordnet sind. So wird eine besonders hohe Festigkeit und Belastbarkeit des Endlosbands auch in Querrichtung erzielt.

In einer weiteren bevorzugten Ausgestaltung des Herstellungsverfahrens wird auf die Anordnung aus Trägerfolie und der zumindest einen Faser und/oder auf eine bereits aufgebrachte der weiteren Lagen ein Bindemittel aufgetragen, um einen Verbund mit weiteren Lagen zu erzielen. Alternativ oder zusätzlich können die weiteren Lagen auflaminiert werden.

Die genannte Trägerfolie kann in einer bevorzugten Ausgestaltung des Endlosbands aus einem Endlosmaterial gefertigt sein, das abgelängt zu einem Ring verbunden ist. Die Verbindung kann dabei über eine Klebenaht erfolgen. In diesem Fall ist die Trägerfolie, die die innere Oberfläche des Endlosbandes darstellt, nicht nahtlos. Die Stabilität des Endlosbands in Längsrichtung wird jedoch durch die spiralförmig aufgewickelten und damit in Längsrichtung endlosen Fasern bestimmt. Das Endlosband zeigt somit auch bei einer nicht endlos ausgeführten Trägerfolie die charakteristischen Stabilitätseigenschaften eines nahtlosen Endlosbands. In einer alternativen bevorzugten Ausgestaltung ist die Trägerfolie als nahtloses Ringmaterial ausgebildet.

In einer weiteren vorteilhaften Ausgestaltung des Endlosbands ist auf der Außenseite eine Deckfolie angeordnet. Diese Deckfolie wird bevorzugt aus einem Endlosmaterial auf die Lage der spiralförmigen Faser aufgebracht. Zur Verbindung der Deckfolie mit der Lage der spiralförmig aufgewickelten Faser und/oder der Trägerfolie kann ein Bindemittel, beispielsweise eine Harz/Binder-Kombination oder ein silkonbasierter Füllstoff, eingesetzt werden, das nach dem Aufbringen der Faserlage appliziert wird. Ein Aushärten des Bindemittels kann dabei durch Pressen und/oder Erwärmen unterstützt werden. Die Schicht aus einer Harz/Binder-Kombination oder einem silkonbasierten Füllstoff kann dabei auch zum Ausfüllen von Zwischenräumen zwischen den Fasern dienen. Sie kann auch ohne eine aufliegende Deckfolie als äußere Lage des Endlosbands eingesetzt werden. Es können dieser Schicht vorteilhaft Zusatzstoffe beigemengt sein, die zu einer elektrischen Leitfähigkeit der Schicht führen, beispielsweise um eine elektrostatische Aufladung des Endlosbands zu verhindern. Die Schicht kann durch Zusatzstoffe auch besonders verschleißfrei und reibungsarm ausgebildet sein. Geeignete Zusatzstoffe sind beispielsweise Kohlenstoff- oder Metallpartikel.

In einer weiteren vorteilhaften Ausgestaltung des Endlosbands kann Kunst-Stoffpulver, beispielsweise PEEK-Pulver, auf die Faserlage aufgebracht werden, das dann über einen Aufschmelzprozess die Fasern innerhalb der Faserlage zusätzlich fixiert, Zwischenräume ausfüllt und/oder die Faserlage mit darüber liegenden Schichten verbindet. Ein Aufschmelzen kann über ein Laser oder Plasmabehandlung erfolgen.

In einer weiteren vorteilhaften Ausgestaltung des Endlosbands variiert ein Wickelabstand der Fasern über die Breite des Endlosbands. Bevorzugt sind die Fasern in einem Randbereich des Endlosbands enger gewickelt als in einem mittleren Bereich. Auf diese Weise kann eine über die Breite variierende Zugbelastbarkeit des Bands eingestellt werden, die den im Betrieb auftretenden Belastungen entspricht. Wenn Bänder im Außenbereich beispielsweise stärker be lastet sind, kann dieses durch einen geringeren Wickelabstand der einzelnen Schleifen in diesem Außenbereich berücksichtigt werden.

Im Randbereich der Widerstandsheizlage, beispielsweise an den gegenüberliegenden Seiten des Endlosbands, können auflaminierte oder aufgedampfte oder anderweitig aufgebrachte Kontaktstreifen angeordnet sein. In einer bevorzugten Ausgestaltung weist die mindestens eine Flächenheizlage eine höhere Dehnbarkeit auf als die Lage der Fasern. Auf diese Weise wird sichergestellt, dass auf das Endlosband wirkende Zugkräfte von der Lage der Fasern aufgenommen werden und nicht zu einer Überdehnung und ggf. Beschädigung der Flächenheizlage führen.

In weiteren vorteilhaften Ausgestaltungen des Endlosbands können neben der Flächenheizlage weitere Funktionslagen in das Endlosband eingearbeitet sein. In einer Ausgestaltung des Endlosbands ist eine elektronische Funktionslage vorgesehen, bei der mindestens eine elektronische Schaltung in Dünnschichttechnologie auf eine Kunststofffolie aufgebracht ist. So können beispielsweise Steuerungsschaltungen oder Sensorschaltungen, insbesondere aufweisend Temperatur- oder Drucksensoren, integriert werden. Ebenso können Kommunikationsschaltungen einschließlich der dafür benötigten Antennen eingebettet werden, beispielsweise zur WLAN- (wireless local area network), Bluetooth-, RFID- (radio frequency Identification) oder GPRS-(general packet radio service) Kommunikation. In einer weiteren Ausgestaltung des Endlosbands ist eine Lage mit einem spiralförmig verlaufenden flexiblen Schlauch vorgesehen. Auf diese Weise kann ein flüssiges oder gasförmiges Medium zu Kühl- oder Heizzwecken verwendet werden.

Eine weitere vorteilhafte Ausgestaltung des Endlosbands weist eine Mehrzahl von über die Oberfläche verteilten Durchlässen auf. Die Durchlässe können vorteilhaft verwendet werden, um ein Werkstück mit Vakuum und/oder Druckluft oder anderen Gase durch das Endlosband zu beaufschlagen.

Weitere vorteilhafte Ausgestaltungen des Endlosbands oder des Herstellungsverfahrens für ein Endlosband sind Gegenstand der abhängigen Ansprüche.

Die Erfindung wird nachfolgend anhand von Ausführungsbeispielen mithilfe von Figuren näher erläutert. Die Figuren zeigen:
- Fig. 1: eine schematische Seitenansicht einer Vorrichtung zur Herstellung eines Endlosbands,
- Fig. 2: eine schematische Draufsicht auf ein Endlosband während seiner Herstellung,
- Fig. 3: eine schematische Schnittdarstellung eines Endlosbands in einem ersten Ausführungsbeispiel und
- Fig. 4: eine schematische Schnittdarstellung eines Endlosbands in einem zweiten Ausführungsbeispiel.

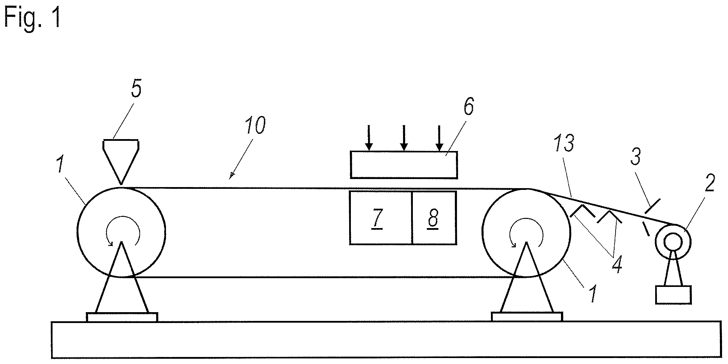

Fig. 1 zeigt eine schematische Seitenansicht einer Vorrichtung zur Herstellung eines Endlosbands 10. Gleiche Bezugszeichen kennzeichnen in dieser wie in den folgenden Figuren gleiche oder gleichwirkende Elemente.

Die Vorrichtung weist zwei voneinander beabstandete drehbare Trommeln 1 auf, deren Drehachsen parallel zueinander ausgerichtet sind. Der Abstand der Trommeln 1 ist einstellbar, um ein Endlosband in gewünschter Länge herstellen zu können. Weiter ist eine ebenfalls drehbare Zufuhrtrommel 2 vorgesehen, auf der ein Rohmaterial für die Herstellung des Endlosbands aufgewickelt ist, beispielsweise eine oder mehrere aufgewickelte Fasern 13.

Die Fasern 13 werden mithilfe einer Führungseinrichtung 3 an einer definierten Position und mit einer definierten Zugspannung von der Zufuhrtrommel 2 abgegeben und umlaufend von den Trommeln 1als ein Element des Endlosbands 10 aufgewickelt. Optional kann dabei vorgesehen sein, die Fasern 13 über Spreizkämme 4, die zwischen der Führungseinrichtung 3 und einer der Trommeln 1 angeordnet sind, aufzuspreizen. Für die Fasern 13 können unterschiedliche Rohmaterialien eingesetzt werden, beispielsweise Thermoplase wie Polyetheretherketon (PEEK) oder Polysulfon (PSU) oder Polytetrafluorethylen (PTFE) oder Duroplaste, aber auch Glas, Kohle oder Aramid.

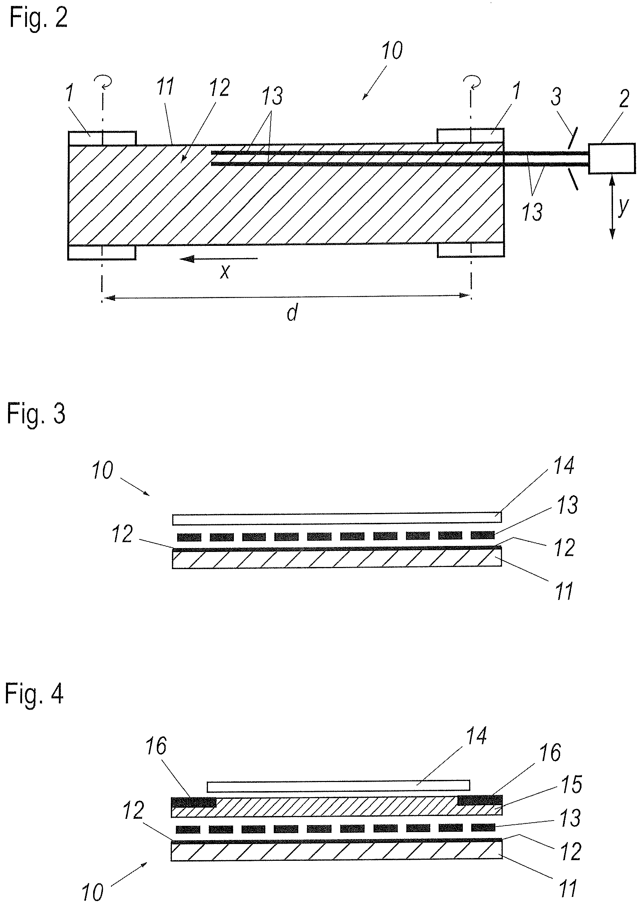

Während des Aufwickelns der Fasern 13 wird zumindest die Führungseinrichtung 3, ggf. auch die Zufuhrtrommel 2 und falls vorhanden auch die Spreizkämme, in der Richtung der Drehachsen der Trommeln 1 bewegt, wodurch sich eine Lage von spiralförmig nebeneinander liegenden Fasern 13 ausbildet. Anmeldungsgemäß wird die Lage der Fasern 13 nicht unmittelbar auf die Trommeln 1 aufgebracht, sondern auf eine klebstoffbeschichtete Trägerfolie. Dieses ist nachfolgend im Zusammenhang mit den Figuren 2 bis 4 näher erläutert.

Weiter weist die Vorrichtung der Fig. 1 eine Einrichtung 5 zum Auftragen eines Bindemittels auf. Im dargestellten Beispiel ist die Einrichtung 5 im Bereich einer der Trommeln 1 angeordnet. Sie kann jedoch auch an anderer Stelle der Vorrichtung vorgesehen sein. Über die Einrichtung 5 kann im Herstellungsprozess Bindemittel auf bereits vorhandene Lagen des Endlosbands 10 aufgetragen werden, mit deren Hilfe ein Verbund mit nachfolgend aufgebrachten Lagen gebildet wird.

Als Bindemittel kann dabei ein Harz oder eine zwei-komponentige Harz/Binder-Kombination eingesetzt werden, beispielsweise auf Basis eines Epoxids, Polyesters, Vinylethers oder auch auf Basis von Polyurethan. Das Bindemittel kann vor dem Aushärten (zäh-) flüssig oder auch pulverförmig sein. Ein Aushärten des Bindemittels kann durch Temperatureinwirkung oder auch durch Applizieren von Druck unterstützt bzw. beschleunigt werden. Dazu ist beispielsweise eine Presse 6 vorgesehen, die Temperaturzonen 7, 8 mit verschiedenen Temperaturen (beispielsweise einer höheren Temperatur in der Zone 7 und einer geringeren Temperatur in der Zone 8) aufweist. Durch das Bindemittel werden die verschiedenen Lagen des Endlosbands 10 miteinander verbunden. Auch wenn die genannten Fasern 13 bereits in einer Klebebeschichtung der Trägerfolie fixiert sind, können sie zusätzlich durch das Bindemittel mit der genannten Deckfolie oder einer zwischengelegten Funktionslage verbunden werden. Zudem werden durch das Bindemittel die Hohlräume zwischen benachbarten, nebeneinander liegenden Fasern 13 aufgefüllt.

In Fig. 2 ist eine Draufsicht auf eine Vorrichtung zur Herstellung eines Endlosbands 10 in einem Zwischenschritt der Herstellung eines solchen Endlosbands 10 wiedergegeben. Die Vorrichtung kann beispielsweise die in Fig. 1 dargestellte sein, wobei aus Gründen der Übersichtlichkeit jedoch vorliegend die Einrichtung 5 zum Auftragen des Bindemittels und die Presse 6 in der Fig. 2 nicht dargestellt sind.

Bei der Herstellung des Endlosbands 10 wird zunächst eine ringförmige, umlaufende Trägerfolie 11 auf die Trommeln 1 gezogen. Die Folie besteht bevorzugt aus einem mechanisch widerstandsfähigen und temperaturbeständigen Kunststoff, beispielsweise PEEK oder einem damit verwandten Kunststoff. Die Dicke der Trägerfolie 11 kann dabei im Bereich von einigen 10 Mikrometern (µm) bis ca. 800 µm liegen, bevorzugt zwischen 25 und 50 Mikrometer. Grundsätzlich ist jede Foliendicke geeignet, solange die Trägerfolie 11 in dem benötigten Radius wickelbar ist.

Die Trägerfolie 11 kann dabei nahtlos gefertigt sein, beispielsweise indem ein Streifen entsprechender Breite, die das Endlosband 10 haben soll, aus einem schlauchförmigen Rohmaterial geschnitten wird. Dieses bietet sich jedoch nur bei kurzen Endlosbändern an, für die ein Schlauchmaterial mit entsprechendem Umfang erhältlich ist. Alternativ ist insbesondere für die Herstellung längerer Endlosbänder vorgesehen, einen abgelängten Streifen eines Endlosmaterials der Trägerfolie 11 um die Trommeln 1 zu legen und überlappend, ggf. mit einer schrägen Schnittlinie, oder auf Stoß miteinander zu verbinden. In beiden Fällen kann eine Verbindung durch aufgetragenen Klebstoff oder mithilfe eines aufgebrachten Klebestreifens erfolgen.

Die Trägerfolie 11 ist an ihrer nach außen weisenden Seite mit einer Klebeschicht 12 versehen. Diese Klebeschicht 12 kann entweder bereits zuvor auf die Trägerfolie 11 aufgebracht sein oder aber auf die Trägerfolie 11 appliziert werden, während sich diese bereits in der Vorrichtung befindet. Ggf. kann dafür die Einrichtung 5 (vgl. Fig. 1) eingesetzt werden. Die Klebeschicht 12 kann eine dauerhaft aktive Klebeschicht sein, wie sie beispielsweise auf selbstklebenden Folien oder Klebestreifen handelsüblich ist. Alternativ kann auch eine aktivierbare Klebeschicht 12 vorgesehen sein, beispielsweise eine Klebeschicht die bei Raumtemperatur nicht selbstklebend ist und erst bei erhöhter Temperatur, beispielsweise ab einer Temperatur von 60 bis 70 Grad Celsius, haftklebrig ist. Eine Temperaturerhöhung zur Aktivierung der Klebeschicht 12 kann beispielsweise durch die Temperaturzonen 7, 8 oder durch eine in den Trommeln 1 vorgesehene Heizung erfolgen. Zudem können weitere Heizelemente entlang dem Endlosband 10 angeordnet sein, beispielsweise eine auf das Endlosband 10 einwirkende Infrarot-Strahlungsheizung.

Da ein Tempern der Klebstoffe auch nach längerer Standzeit noch zu einer erhöhten Endfestigkeit der Klebstoffe führt, kann auch eine in das Endlosband 10 integrierte Heizung nach Fertigstellung des Endlosbands 10 verwendet werden, um die Klebeschicht 12 zur Endfestigkeit zu führen. Eine solche integrierte Heizung ist im Zusammenhang mit Fig. 4 näher beschrieben.

Danach wird zumindest eine Faser 13 in der Klebeschicht 12 fixiert und spiralförmig auf die Trägerfolie 11 gewickelt. In dem in Fig. 2 dargestellten Beispiel werden zwei Fasern 13 von der Zufuhrtrommel 2 und der Führungseinrichtung 3 mit einer konstanten und bevorzugt einstellbaren, insbesondere regelbaren Zugspannung, auch Vorspannung genannt, bereitgestellt. Die beiden Fasern 13 werden durch Bewegung der Trommeln 1 um die Trägerfolie 11 gewickelt, wobei die ggf. hitzeaktivierte Klebeschicht 12 die Fasern 13 unmittelbar bei Kontakt der Fasern 13 mit der Trägerfolie 11 an dieser fixiert. Während des Aufwickelns der Fasern 13 auf die Trägerfolie 11 wird die Zufuhrtrommel 2 mit der Führungseinrichtung 3 in einer Richtung y, die quer zur Fortbewegungsrichtung x der Trägerfolie 11 verläuft, bewegt. Die Fasern 13 werden so spiralförmig in Schlingen um die Trägerfolie 11 gelegt. Im Resultat können die einzelnen Fasern 13 unmittelbar benachbart oder auch beabstandet voneinander auf der Trägerfolie 11 angeordnet und in deren Klebeschicht 12 fixiert sein. Nach Aufbringen der Lage aus den Fasern 13 werden die Fasern am Ausgang der Zufuhrtrommel bzw. der Führungseinrichtung abgeschnitten.

In der Fig. 2 sind zwei einzelne Fasern 13 dargestellt. Es versteht sich, dass die Anzahl von zwei dargestellten Fasern 13 beispielhaft ist. Die Fasern 13 können dabei einen beliebigen Querschnitt aufweisen. Bevorzugt ist ein eher flacher, bandförmiger Querschnitt.

Im nachfolgenden Schritt können weitere Lagen oder Schichten auf die Lage aus den Fasern 13 aufgebracht werden, um das Endlosband mit gewünschten Oberflächeneigenschaften oder Funktionalitäten zu versehen. Die weiteren aufgebrachten Lagen können dabei ähnlich wie die Trägerfolie 11 Folien sein, die vorab mit einer Klebeschicht versehen sind, mit der sie auf der Lage der Fasern 13 haftet. Alternativ ist denkbar, über die in Fig. 1 gezeigte Einrichtung 5 ein Bindemittel auf den Verbund aus Trägerfolie 11 und Fasern 13 aufzubringen, durch das die nachfolgenden Lagen verbunden werden.

Fig. 3 zeigt einen Querschnitt durch ein auf diese Weise entstandenes Endlosband 10. Die Schnittzeichnung der Fig. 3 ist rein schematisch, insbesondere sind die Schichtdicken- und abstände nicht maßstabsgetreu eingezeichnet.

Das Endlosband der Fig. 3 weist die genannte Trägerfolie 11 mit der aufgebrachten Klebeschicht 12, auf die die Lage der spiralförmig angeordneten Fasern 13 aufgebracht ist. Abgeschlossen wird das Endlosband 10 nach außen durch eine Deckfolie 14, die beispielsweise ebenso wie die Folie 11 aus PEEK besteht bestehen kann.

Fig. 4 zeigt in gleicher Weise wie Fig. 3 den Querschnitt eines Endlosbands in einem zweiten Ausführungsbeispiel. Auf den Verbund aus Trägerfolie 11 und in deren Klebeschicht 12 fixierten Fasern 13 ist hier eine Flächenheizlage 15 als Funktionsschicht angeordnet.

Die Flächenheizlage 15 besteht beispielsweise ihrerseits aus einem Verbund von Folien, beispielsweise PEEK-Folien, zwischen denen eine Widerstandsheizschicht angeordnet ist, bevorzugt bestehend aus einer Lage von miteinander vernetzten Kohlenstofffasern. Am äußeren Rand der Flächenheizlage 15 sind Kontaktstreifen 16, beispielsweise aufgedampfte Kupferstreifen angeordnet.

Als Flächenheizlage 15 kann beispielsweise eine Flächenheizfolie der Firma Frenzelit Werke GmbH verwendet werden, die unter dem Markennamen "HICOTEC-TP" erhältlich ist. Diese Folie zeichnet sich durch ein homogenes Heizverhalten aus, ist mechanisch stabil und chemisch gegen viele Medien inert. Zudem kann der spezifisch elektrische Flächenwiderstand im Herstellungsprozess definiert eingestellt werden, so dass für jede benötigte Breite und Länge des Endlosbands ein im Hinblick auf die anzulegende Spannung und dem zuzuführenden Strom geeigneter Widerstand erzielt werden kann.

Auf die Flächenheizlage 15 ist im Beispiel der Fig. 4 zusätzlich eine Deckfolie 14 aufgebracht, deren Breite so bemessen ist, das zumindest Teile der Kontaktstreifen 16 freigelegt bleiben, um die Flächenheizlage 15 des Endlosbands 10 im Betrieb mit Strom versorgen zu können. Eine Stromzufuhr kann dabei beispielsweise über Schleifkontakte erfolgen.

Mit dem in Fig. 4 gezeigten Ausführungsbeispiel des Endlosbands 10 ist ein Endlosband geschaffen, das mechanisch stabil und chemisch inert ist und das eine integrierte Heizfunktion hat. Damit kann dieses Band in vielen industriellen Fertigungsprozessen eingesetzt werden, beispielsweise innerhalb von Doppelbandpressen, bei dem in herkömmlicher weise durch das Band Wärme auf ein zu bearbeitendes Werkstück übertragen wird.

Die integrierte Heizung des Endlosbands 10 kann zusätzlich zu einer Heizplatte, über die das Endlosband 10 geführt wird, eingesetzt werden oder die Heizplatte vollständig ersetzen. Durch die integrierte Heizung ergibt sich der Vorteil einer besseren Regelbarkeit und eines schnelleren Aufheizens. Die Heizplatte kann dann eine Wärmegrundlast bereitstellen wohingegen benötigte Prozesswärme ggf. auch kurzzeitig oder stoßweise durch die im Endlosband 10 integrierte Flächenheizlage 1 5 bereitgestellt wird. Die Flächenheizlage 1 5 kann dabei vollumfänglich um das Endlosband 10 ausgeführt sein. Alternativ ist es auch denkbar, die Flächenheizlage 1 5 nur in Teilen des Umfangs des Endlosbands 10 auszubilden. Auch ist denkbar, mehrere Flächenheizlagen 1 5 überlappend oder teilweise überlappend oder auch in Umfangrichtung beabstandet voneinander im Endlosband 10 vorzusehen.

Zusätzlich zu der oder den Flächenheizlagen 15 können weitere Funktionslagen in das Endlosband eingearbeitet sein. Beispielsweise kann eine elektronische Funktionslage vorgesehen sein, bei der mindestens eine elektronische Schaltung in Dünnschichttechnologie auf eine Kunststofffolie aufgebracht ist. So können beispielsweise Steuerungsschaltungen oder Sensorschaltungen, insbesondere aufweisend Temperatur- oder Drucksensoren, integriert werden. Ebenso können Kommunikationsschaltungen einschließlich der dafür benötigten Antennen eingebettet werden, beispielsweise zur WLAN- (wireless local area network), Bluetooth-, RFI D- (radio frequency Identification) oder GPRS- (general packet radio Service) Kommunikation.

Auch ist es möglich, eine Lage mit einem spiralförmig verlaufenden flexiblen Schlauch vorzusehen. Durch den Schlauch kann ein flüssiges oder gasförmiges Medium zu Kühl- oder Heizzwecken geführt werden.

Alternativ ist es möglich, zusätzlich aufgebrachte Schichten, beispielsweise die Deckfolie 14 oder die Flächenheizlage 15, nicht mithilfe von Klebstoff oder Bindemitteln mit der Lage der Fasern 13 zu verbinden, sondern lediglich durch Applizieren von Druck bei einer Temperatur die ggf. oberhalb des Schmelzpunktes der Folien bzw. Lagen liegt, in einem Laminierprozess miteinander zu verbinden.

Insbesondere bei den äußeren Schichten kann es jedoch vorteilhaft sein, einen Klebstoff bzw. ein Bindemittel zu verwenden, das die beim Umlaufen des Endlosbands 10 auftretenden Scherbewegungen aufnehmen kann. Ein geeigneter Klebstoff hier ist beispielsweise ein Acrylatkleber oder ein Polysiloxankleber. Durch diesen Klebstoff als Bindemittel werden Spannungen beim Umlaufen des Endlosbands 10 verringert und so die Lebensdauer des Bands erhöht. Die äußeren Schichten und insbesondere vorgesehene Funktionsschichten können so von den Zug aufnehmenden Schichten, der Trägerschicht und den Fasern, bis zu einem gewissen Grad abgekoppelt werden.

In alternativen Ausgestaltungen des Herstellungsprozesses und entsprechend des hergestellten Endlosbands werden die Fasern 13 nicht einzeln in die Klebeschicht 12 der Trägerfolie 11 gelegt sondern es werden mehrere Fasern 13 auf einen schmalen Folienstreifen geklebt und anstelle einzelner Fasern 13 im Herstellungsprozess dieser Folienstreifen mit den aufgebrachten Fasern in die Klebeschicht 12 der Trägerfolie 11 spiralförmig gewickelt. Dieses hat den Vorteil, dass auf einfache Art mehrere Fasern 13 (Einzelfasern, Faserbündel) parallel aufgebracht werden können.

Das Endlosband 10 kann nachträglich perforiert werden, um auch für Prozesse in den Vakuum und/oder Druckluft oder andere Gase am Werkstück appliziert werden, verwendet werden zu können. Aufgrund des Aufbaus und der Eigenschaften der Flächenheizlage 15 kann auch diese entsprechende Durchlässe (Öffnungen) aufweisen. Bevorzugt sind dabei die Durchlässe von einem Saum umgeben, innerhalb des die äußeren Kunststofffolien der Flächenheizlage 15 unmittelbar miteinander verbunden sind. Dieser Saumbereich verhindert dann ein Eindringen von Prozessmittel zwischen die Kunststofffolien in das Innere der Flächenheizlage 15.

In einer weiteren Ausgestaltung kann das in Fig. 3 oder Fig. 4 gezeigte Endlosband 10 eine weitere Lage aufweisen, die durch Fasern oder Folienstreifen gebildet wird, die quer zu der Längserstreckung des Endlosbands 10 angeordnet sind. Durch eine solche Lage wird eine besonders hohe Festigkeit und Belastbarkeit des Endlosbands 10 auch in Querrichtung erzielt.

### Bezugszeichenliste

- 1: Trommel
- 2: Zufuhrtrommel
- 3: Führungseinrichtung
- 4: Spreizkamm
- 5: Einrichtung zum Auftragen eines Bindemittels
- 6: Presse
- 7, 8: Temperaturzone

- 10: Endlosband
- 11: Trägerfolie
- 12: Klebeschicht
- 13: Faser
- 14: Deckfolie
- 15: Flächenheizlage
- 16: Kontaktstreifen

## Patentansprüche

1. Verfahren zum Herstellen eines Endlosbands (10), das zumindest eine im Endlosband (10) spiralförmig umlaufende Faser (13) aufweist, eine umlaufende Trägerfolie (11) bereitgestellt wird, die eine mit einer Klebeschicht (12) versehene Seite aufweist, und dass die zumindest eine Faser (13) spiralförmig auf die mit der Klebeschicht (12) versehene Seite der Trägerfolie aufgebracht wird, wobei auf die Anordnung aus Trägerfolie (11) und der zumindest einen Faser (13) weitere Lagen aufgebracht werden, **dadurch gekennzeichnet, dass** die weiteren Lagen eine Flächenheizlage (15) umfassen, wobei die Flächenheizlage durch mehrere in Längserstreckung- oder Querrichtung übereinander oder überlappend angeordnete Widerstandsheizlagen gebildet wird, wobei die verschiedenen Widerstandsheizlagen unterschiedliche Flächenheizleistungen aufweisen.

2. Verfahren nach Anspruch 1, bei dem eine der weiteren Lagen durch Fasern oder Folienstreifen gebildet wird, die quer zu der Längserstreckung des Endlosbands (10) angeordnet sind.

3. Verfahren nach einem der Ansprüche 1 bis 2, bei dem auf die Anordnung aus Trägerfolie (11) und der zumindest einen Faser (13) und/oder auf eine bereits aufgebrachte der weiteren Lagen ein Bindemittel aufgetragen wird, um einen Verbund mit weiteren Lagen zu erzielen.

4. Verfahren nach einem der Ansprüche 1 bis 3, bei dem die weiteren Lagen auf die Anordnung aus Trägerfolie (11) und der zumindest einen Faser (13) auflaminiert werden.

5. Endlosband (10), mit einer umlaufenden Trägerfolie (11), die eine mit einer Klebeschicht (12) versehene Seite aufweist, wobei zumindest eine Faser (13) spiralförmig auf die mit der Klebeschicht (12) versehene Seite der Trägerfolie aufgebracht ist, **dadurch gekennzeichnet, dass** es eine Flächenheizlage (15) aufweist und nach einem Verfahren gemäß einem der Ansprüche 1 bis 4 hergestellt ist, wobei eine umlaufende Deckfolie (14) als abschließende äußere Lage vorgesehen ist und die Flächenheizlage (15) durch mindestens eine zwischen Kunststofffolien eingebettete Widerstandsheizschicht, insbesondere Kohlefasern umfassend, gebildet ist, wobei die Flächenheizlage durch mehrere in Längserstreckung- oder Querrichtung übereinander oder überlappend angeordnete Widerstandsheizlagen gebildet, wobei die verschiedenen Widerstandsheizlagen unterschiedliche Flächenheizleistungen aufweisen.

6. Endlosband (10) nach Anspruch 5, bei dem die Trägerfolie (11) ein aus einem Endlosband gefertigter Ring mit einer Nahtstelle ist.

7. Endlosband (10) nach Anspruch 5, bei dem die Trägerfolie (11) ein nahtloser ringförmiger Abschnitt aus einem Schlauchmaterial ist.

8. Endlosband (10) nach einem der Ansprüche 5 bis 7, bei dem die Trägerfolie (11) aus PEEK besteht.

9. Endlosband (10) nach einem der Ansprüche 5 bis 8, bei dem die Faser (13) eine Kunstfaser ist, insbesondere aus Kohlenstoff, Glas, Aramid, PEEK, PSU oder PTFE.

10. Endlosbands (10) nach einem der Ansprüche 5 bis 9, bei dem ein Wickelabstand der Fasern (13) über die Breite des Endlosbands (10) variiert.

11. Endlosband (10) nach Anspruch 10, bei dem die Fasern (13) in einem Randbereich des Endlosbands (10) enger gewickelt sind als in einem mittleren Bereich.

12. Endlosband (10) nach einem der Ansprüche 5 bis 11, bei dem die Flächenheizlage (15) eine höhere Dehnbarkeit aufweist als die Lage der Fasern (13).

13. Endlosband (10) nach einem der Ansprüche 5 bis 12, aufweisend eine elektronische Funktionslage, bei der mindestens eine elektronische Schaltung in Dünnschichttechnologie auf eine Kunststofffolie aufgebracht ist.

14. Endlosband (10) nach einem der Ansprüche 5 bis 13, 11, aufweisend eine Lage mit einem spiralförmig verlaufenden flexiblem Schlauch.

15. Endlosband (10) nach einem der Ansprüche 5 bis 14, aufweisend eine Mehrzahl von über die Oberfläche verteilten Durchlässen.

## Claims

1. A method for producing an endless belt (10), which has at least one fibre (13), which runs around in a spiral manner in the endless belt (10), a peripheral carrier film (11) is provided, which has a side provided with an adhesive layer (12), and the at least one fibre (13) is applied in a spiral manner to the side of the carrier film which is provided with the adhesive layer (12), further layers being applied to the arrangement made up of carrier film (11) and the at least one fibre (13),
**characterized in that** the further layers comprise a surface heating layer (15), wherein the surface heating layer is formed by a plurality of resistance heating layers arranged above one another or in an overlapping manner in the direction of longitudinal extent or the transverse direction, wherein the various resistance heating layers have different surface heating outputs.

2. The method according to claim 1, in which one of the further layers is formed by fibres or film strips, which are arranged transversely to the longitudinal extent of the endless belt (10).

3. The method according to one of claims 1 to 2, in which a binding agent is applied onto the arrangement made up of carrier film (11) and the at least one fibre (13) and/or onto one of the further layers which has already been applied, in order to achieve a bond with further layers.

4. The method according to one of claims 1 to 3, in which the further layers are laminated onto the arrangement made up of carrier film (11) and the at least one fibre (13).

5. An endless belt (10), having a peripheral carrier film (11), which has a side provided with an adhesive layer (12), at least one fibre (13) being applied in a spiral manner onto the side of the carrier film which is provided with the adhesive layer (12), **characterized in that** the endless belt has a surface heating layer (15) and is produced according to a method according to one of claims 1 to 4, wherein a peripheral cover film (14) is provided as a final outer layer and the surface heating layer (15) is formed by at least one resistance heating layer, particularly comprising carbon fibres, embedded between plastic films, wherein the surface heating layer is formed by a plurality of resistance heating layers arranged above one another or in an overlapping manner in the direction of longitudinal extent or transverse direction, wherein the various resistance heating layers have different surface heating outputs.

6. The endless belt (10) according to claim 5, in which the carrier film (11) is a ring with a seam, produced from an endless belt.

7. The endless belt (10) according to claim 5, in which the carrier film (11) is a seamless annular section made from a hose material.

8. The endless belt (10) according to one of claims 5 to 7, in which the carrier film (11) consists of PEEK.

9. The endless belt (10) according to one of claims 5 to 8, in which the fibre (13) is a synthetic fibre, particularly made from carbon, glass, aramid, PEEK, PSU or PTFE.

10. The endless belt (10) according to one of claims 5 to 9, in which a winding space of the fibres (13) varies over the width of the endless belt (10).

11. The endless belt (10) according to claim 10, in which the fibres (13) are wound more closely in an edge region of the endless belt (10) than in a central region.

12. The endless belt (10) according to one of claims 5 to 11, in which the surface heating layer (15) has a higher elasticity than the layer of fibres (13).

13. The endless belt (10) according to one of claims 5 to 12, having an electronic functional layer, in which at least one electronic circuit is applied to a plastic film in thin-film technology.

14. The endless belt (10) according to one of claims 5 to 13, having a layer with a spirally running flexible hose.

15. The endless belt (10) according to one of claims 5 to 14, having a plurality of outlets distributed over the surface.

## Revendications

1. Procédé de fabrication d'une bande sans fin (10) présentant au moins une fibre (13) tournant en spirale dans la bande sans fin (10), dans lequel une pellicule de support circulaire (11) est agencée, qui présente un côté prévu avec une couche adhésive (12), et dans lequel au moins une fibre (13) en forme de spirale va être appliquée sur le côté de la pellicule de support prévu avec la couche d'adhésive (12), dans lequel des couches supplémentaire sont appliquées lors de l'agencement de la pellicule de support (11) et de la au moins une fibre (13),
**caractérisé en ce que** les couches supplémentaires présentent une couche de chauffage de surface (15), dans lequel la couche de chauffage de surface va être formée de plusieurs couches de chauffage résistives agencées à la suite ou en chevauchement dans la direction longitudinale ou latérale, dans lequel les différentes couches de chauffage résistives présentent différentes puissances de chauffage de surface.

2. Procédé selon la revendication 1, dans lequel l'une des couches supplémentaires est formée par des fibres ou des bandes de film, qui sont agencées transversalement à la dimension longitudinale de la bande sans fin (10).

3. Procédé selon la revendication 1 ou 2, dans lequel un moyen de liaison est appliqué lors de l'agencement de la pellicule de support (11) et de la au moins une fibre (13) et/ou sur une des couches supplémentaires déjà appliquée, pour réaliser une liaison avec des couches supplémentaires.

4. Procédé selon l'une quelconque des revendications 1 à 3, dans lequel les couches supplémentaires sont stratifiées lors de l'agencement de la pellicule de support (11) et de la au moins une fibre (13).

5. Bande sans fin (10) ayant une pellicule de support circulaire (11), qui présente un côté prévu avec une couche adhésive (12), dans laquelle au moins une fibre (13) en forme de spirale va être appliquée sur le côté de la pellicule de support prévu avec la couche d'adhésive (12), **caractérisée en ce qu'**elle présente une couche de chauffage de surface (15) et est fabriquée selon l'une quelconque des revendications 1 à 4, dans laquelle une pellicule de recouvrement circulaire (14) est prévue en tant que couche extérieure finale, et la couche de chauffage de surface (15) est réalisée par au moins une couche de chauffage résistive incorporée entre deux pellicules de plastique, comprenant en particulier des fibres de carbones, dans laquelle la couche de chauffage de surface va être formée de plusieurs couches de chauffage résistives agencées à la suite ou en chevauchement dans la direction longitudinale ou latérale, dans laquelle les différentes couches de chauffage résistives présentent différentes puissances de chauffage de surface.

6. Bande sans fin (10) selon la revendication 5, dans laquelle la pellicule de support (11) est un anneau fait sur mesure de bande sans fin avec une transition.

7. Bande sans fin (10) selon la revendication 5, dans laquelle la pellicule de support (11) est un tronçon en forme d'anneau sans transition en un matériau tubulaire.

8. Bande sans fin (10) selon l'une quelconque des revendications 5 à 7, dans laquelle la pellicule de support (11) est réalisée en PEEK.

9. Bande sans fin (10) selon l'une quelconque des revendications 5 à 8, dans laquelle la fibre (13) est une fibre synthétique, en particulier de carbone, de verre, d'aramide, de PEEK, de PSU ou de PTFE.

10. Bande sans fin (10) selon l'une quelconque des revendications 5 à 9, dans laquelle la distance d'enroulement des fibres (13) varie sur la largeur de la bande (10) sans fin.

11. Bande sans fin (10) selon la revendication 10, dans laquelle les fibres (13) sont enroulées de façon étroite dans une zone de bord de la bande sans fin (10), comme dans une zone médiane.

12. Bande sans fin (10) selon l'une quelconque des revendications 5 à 11, dans laquelle la couche de chauffage de surface (15) présente une ductilité plus élevée que la couche des fibres (13).

13. Bande sans fin (10) selon l'une quelconque des revendications 5 à 12, présentant une couche fonctionnelle électronique, par l'intermédiaire de laquelle au moins un circuit électronique est appliqué sur une pellicule de plastique selon une technologie de couches minces.

14. Bande sans fin (10) selon l'une quelconque des revendications 5 à 13, présentant une couche avec un flexible s'étendant en spirale.

15. Bande sans fin (10) selon l'une quelconque des revendications 5 à 14, présentant une pluralité de passages répartis sur la surface supérieure.
